# EUROPÄISCHE PATENTSCHRIFT

(11) **EP 1 125 082 B1**
(45) Veröffentlichungstag und Bekanntmachung des Hinweises auf die Patenterteilung: **14.01.2004**
(21) Anmeldenummer: 99952623.9
(22) Anmeldetag: 22.10.1999
(51) Int. Cl.: F16L 58/10, F16L 55/165

(54) **SCHLAUCH ZUR AUSKLEIDUNG VON ROHRLEITUNGEN UND VERFAHREN ZU DESSEN HERSTELLUNG**
TUBING FOR LINING PIPES AND METHOD FOR PRODUCING THE SAME
FLEXIBLE POUR GARNIR DES CONDUITES ET PROCEDE PERMETTANT DE LE PRODUIRE

(30) Priorität: 26.10.1998 DE 19850227
(43) Veröffentlichungstag der Anmeldung: 22.08.2001
(73) Patentinhaber: Schwert, Siegfried, 14195 Berlin (DE)
(72) Erfinder: Schwert, Siegfried, 14195 Berlin (DE)
(74) Vertreter: Pfenning, Meinig & Partner
(86) Internationale Anmeldenummer: PCT/EP1999/008011
(87) Internationale Veröffentlichungsnummer: WO 2000/025057

(56) Entgegenhaltungen:
- BE-A- 886 312
- CH-A- 675 287
- GB-A- 1 569 675
- US-A- 5 771 940

## Beschreibung

Die vorliegende Erfindung betrifft eine Anordnung aus einer Rohrleitung und einem diese auskleidenden Schlauch sowie ein Verfahren zu deren Herstellung. Das Hauptanwendungsgebiet sind Leitungen, in denen ein Fluid, z.B. Erdgas, unter hohem Druck transportiert wird.

Es ist bekannt, außen beschichtete Schläuche zur Auskleidung einer Rohrleitung mit einer Öffnung am Rohranfang umstülpend in diese Rohrleitung einzubringen, wobei die Außenfläche des Schlauches umgestülpt wird und mit der Innenwand der auszukleidenden Rohrleitung verklebt wird. Der Schlauch kann jedoch auch durch Einziehen (ohne Umstülpung) in eine Rohrleitung eingebracht und anschließend verklebt werden.

Die bisher hierfür verwendeten Schläuche bestehen meist aus einem Textilgewebe mit einer darauf extrudierten Beschichtung aus einem thermoplastischen Kunststoff. Diese Beschichtung bildet die Innenwand einer ausgekleideten Rohrleitung. Der Schlauch wird mittels Klebstoff, der sich zwischen der Innenwand der Rohrleitung und dem thermoplastischen Kunststoff befindet (d.h. das Textilgewebe ist nahezu vollständig mit Klebstoff durchdrungen, und es bilden sich keine Kanäle, die zu einer Hinterwanderung des Fluids führen können), unter Bildung einer Schlauchanordnung zur Auskleidung der Rohrleitung, mit der Rohrleitung vollflächig verbunden. Die Beschichtung wird u.a. für die Reversion (nur bei Umstülpung) und den Aushärteprozess benötigt, d.h. durch Druckbeaufschlagung des Schlauchinneren wird der Schlauch gegen die Rohrinnenfläche gepreßt, so daß es zu einem dauerhaften Verkleben zwischen Schlauch und Rohrleitung kommt. Die Beschichtung verhindert dabei, daß Luft, Dampf oder auch Wasser durch das Textilgewebe dringt, sich mit dem Klebstoff vermischt und somit die Qualität der Klebung beeinträchtigt.

Bei sehr hohen Betriebsdrücken, etwa ab 16 bar, kann die bekannte Technik der Gewebeschlauchsanierung jedoch nicht mehr zur Anwendung kommen. Dies liegt darin begründet, daß z.B. bei einem Betriebsausfall der Höchstdruckleitung und somit schlagartigem Druckabfall, die Schläuche von der Rohrwand "abgesprengt" werden oder sich zumindest in Teilbereichen blasenartig ablösen. Der Grund hierfür ist wie folgt: Die Beschichtung ist im Verbund mit dem Gewebe zwar ausreichend stabil, um dem Innendruck in der ausgekleideten und wieder in Betrieb genommenen Rohrleitung standzuhalten. Da jedoch die Beschichtung im allgemeinen eine Permeation aufweist, durchdringt langfristig aufgrund von Diffusionsvorgängen das Fluid, z.B. Erdgas, die Beschichtung. Somit werden Poren, die sich im Klebstoff selbst oder innerhalb des nicht vollständig mit Klebstoff durchtränkten textilen Gebildes befinden, mit demselben Druck beaufschlagt, welcher in der ausgekleideten Rohrleitung vorherrscht.

Solange der Betriebsdruck aufrecht erhalten wird, sind wegen des Gleichgewichtes der Drücke keine Schäden zu erwarten, wohl aber bei plötzlichem Druckabfall, z.B. bei einer Rohrhavarie oder sonstigen Betriebsausfällen, jedoch auch bei geplanten Außerbetriebnahmen der Rohrleitung. In diesem Falle befindet sich in den zuvor beschriebenen Poren weiterhin der volle Betriebsdruck, da dieser über die Beschichtung nicht schlagartig in Richtung der Rohrmitte, d.h. den Fließraum des mit der Rohrleitung zu transportierenden Fluids, entweichen kann. Während im Bereich zwischen Rohrinnenwand und der Beschichtung der Betriebsdruck der Höchstdruckleitung sich weiterhin hält, ist in dem Fließraum z.B. nur atmosphärischer Druck. Bedingt durch diesen nur geringen Gegendruck kommt es zu Ausdehnungsprozessen der in den Poren eingesperrten Gase, welche mit Abplatzungen des Schlauches (Beulenbildung) oder gar einem totalen Abriß der Schlauchhülle von der Rohrwandung verbunden sind.

Aus der BE 886 312 A ist bereits ein Schlauch zum Transportieren von heißen Flüssigkeiten, insbesondere heißem Wasser bekannt. Um eine Beschädigung des Schlauchmaterials, vornehmlich eine Erhöhung der Durchlässigkeit durch die heißen Flüsigkeiten während des Betriebs zu unterbinden, ist der Schlauch im Inneren mit einer für die Flüssigkeiten undurchlässigen Aluminiumschicht ausgekleidet.

In der CH 675 287 A wird ein Verfahren zum Sanieren verlegter Rohrleitungen beschrieben, bei dem ein dreilagiger Schlauch, bestehend aus einer Innen- und einer Außenlage, von denen zumindest eine strahlendurchlässig und zumindest eine gasdicht ist, und einer mit UV-strahlungshärtbarem Harz imprägnierten Zwischenlage. Der Schlauch wird in die Rohrleitung eingebracht und aufgetrieben, und anschließend wird das Harz in der Zwischenlage mit Hilfe von im Schlauchinnern erzeugter UV-Strahlung ausgehärtet.

Der vorliegenden Erfindung liegt die Aufgabe zugrunde, eine Anordnung aus einer Rohrleitung und einem diese auskleidenden Schlauch sowie ein entsprechendes Herstellungsverfahren zur Verfügung zu stellen, bei welcher bei einem Druckabfall im Fließraum keine Beschädigungen der Auskleidung und damit verbundene Sicherheits- und Kostenrisiken auftreten.

Diese Aufgabe wird in Bezug auf die Anordnung durch Patentanspruch 1 und in Bezug auf das Herstellungsverfahren durch Patentanspruch 19 gelöst.

Dadurch, daß dem Schlauchrohling eine Sperrschicht zugeordnet ist, welche eine Permeation von unpolaren gasförmigen Stoffen von unter 1 ml/ (bar d m²) und eine Permeation von polaren gasförmigen Stoffen von unter 0,1 ml/(bar d m²) aufweist (d = Tag), wird die Durchdringung des Schlauches durch Gase von vornherein vermieden bzw. die Diffusion von Gasen in den Zwischenraum zwischen Rohrinnenwand und Fließraum so verlangsamt, daß selbst nach einem langjährigen Dauerbetrieb, z.B. von 50 Jahren, ein schlagartiger Druckabfall im Schlauchinneren keine Beschädigungen der Auskleidung hervorrufen würde.

Vorteilhafte Weiterbildungen der vorliegenden Erfindung werden in den abhängigen Patentansprüchen angegeben.

Bevorzugt ist eine Sperrschicht, bei der die Permeation unpolarer und polarer gasförmiger Stoffe im Bereich zwischen 0,0001 ml/(bar d m²) und 0,01 ml/(bar d m²) liegt.

Eine besonders vorteilhafte Ausführungsform des Schlauches sieht vor, daß dieser als Schlauchverbund, d.h. mehrschichtig ausgeführt ist, wobei eine Schicht als Sperrschicht ausgebildet ist. Dies ermöglicht, daß herkömmliche Gewebeschläuche, welche sonst nach dem Stand der Technik in einem Extruder mit thermoplastischen Kunststoffen beschichtet wurden und eine unzureichende Permeationsgeschwindigkeit aufwiesen, auch für den Schlauch weiter verwendet werden können. Die Abschottwirkung des Schlauches wird in dieser Ausführungsform lediglich durch die Sperrschicht bewirkt.

Die Sperrschicht besteht vorteilhafterweise aus Metall, insbesondere Aluminium, Titan, Kupfer, Eisen, Zink, Nickel, Blei, Chrom oder Eisen-Zink- Sowie Blei-Zinn-Legierungen. Hierbei hat die Sperrschicht bevorzugt eine Dicke im Bereich von 10 bis 100 µm.

Weitere für die Sperrschicht geeignete materialien sind organische Substanzen wie Polyvinylalkohole (PVA), flüssigkristalline Polymere (LCP), Polyamide (PA), Polyacrylnitril, Polyvinylidenchlorid (PVDC) oder siliciumorganische Verbindungen sowie anorganische Substanzen wie Siliciumoxid (SiOₓ mit x≤2) oder Aluminiumoxid (Al₂O₃). Es ist sogar möglich, zur Verringerung der Gas-Permeation eine etwa durch Extrusion aufgebrachte Sperrschicht aus einem thermoplastischen Kunststoff, welcher mit Aluminiumpartikeln durchmischt ist, herzustellen.

Zum Schutz der Sperrschicht gegen Abrieb oder Ablösung kann auf ihrer radial inneren Seite mit einer Schutzschicht versehen sein, die beispielsweise durch Extrusion oder durch Tauchbeschichtung aufgebracht wurde. Als Materialien für eine derartige Schutzschicht eignen sich für Gasleitungen und in einigen Fällen Abwasserdruckrohrleitungen insbesondere Polyurethan, speziell in seiner Ausführung als thermoplastisches Polyurethan-Elastomer (TPU) sowie Polyester, speziell in seiner Ausführung als thermoplastisches Polyether-Ester-Elastomer (TPE), und für Trinkwasser-, Brauchwasser-, Fernwärme- und in einigen Fällen Abwasserdruckrohleitungen Polyolefine einschließlich Polyethylen (PE) sowie Copolymeren aus Ethylen und anderen α-Olefinen und thermoplastischen Polyolefin-Elastomeren (TPO), thermoplastische Styrol-Butadien- bzw. Styrol-Ethylen-Propylen-Copolymere (TPS) und Mi schungen aus Polypropylen und vernetzten Ethylen-Propylen-Dien-Copolymere (TPV).

Der zur Befestigung des Schlauches von der Innenwand einer Rohrleitung verwendete Klebstoff kann selbst eine geringe Gasdurchlässigkeit besitzen, so daß er zumindest einen Teil der Sperrschicht bildet. Auch kann das Gewebe des Schlauchrohlings mit einem Material getränkt sein, das weitgehend gasundurchlässig ist und damit ebenfalls zumindest einen Teil der Sperrschicht bildet. Schließlich kann zur Verringerung der Gasdurchlässigkeit das Gewebe selbst aus diffusionsarmen Garnen bestehen, beispielsweise aus Glas- oder Aramidfasern.

Die Sperrschicht kann in der Weise hergestellt werden, daß sie durch Vakuumaufdampfung auf den Schlauchrohling aufgetragen wird.

Besteht die Sperrschicht aus Metall, kann sie auch galvanisch aufgebracht werden. Hierzu findet zunächst eine Vorbehandlung der thermoplastischen Beschichtung mittels oxydierender Lösungen (z.B. Chromsäure) statt. Daraufhin erfolgt eine naßchemische Abscheidung sehr geringer Mengen von Palladium und eventuell von Nickel, um eine elektrisch leitfähige Schicht zu erzeugen, deren Dicke etwa 0,1 bis 0,2 µm beträgt. Anschließend erfolgt die galvanische Abscheidung des gewünschten Metalls mit einer Schichtdicke im Bereich von etwa 10 bis 100 µm.

Die Sperrschicht kann in der Weise hergestellt werden, daß eine streifenförmige Folie aus einem Material geringer Gaspermeation vor dem Einbringen des Schlauchrohlings in die Rohrleitung um diesen oder nach dem Einbringen des Schlauchrohlings auf dessen Innenfläche gewickelt wird.

Eine weitere vorteilhafte Weiterbildung des Herstellungsverfahrens sieht vor, daß ein Schlauchrohling, etwa ein unbeschichteter Gewebeschlauch nach dem Stand der Technik, über eine sperrschichtbildende schlauchförmige Hülle geringer Gas-Permeation gestreift oder in diese eingezogen wird. Wird der Schlauchrohling über die schlauchförmige Hülle, etwa aus Aluminiumfolie, gezogen, so kann der dadurch entstehende Schlauch in eine Rohrleitung eingezogen werden. Soll der Schlauch dagegen im Umstülpverfahren in die Rohrleitung eingebracht werden, ist es vorteilhaft, den Schlauchrohling in die schlauchförmige Hülle, etwa aus Aluminiumfolie oder einem anderen Material mit geringer Gas-Permeation einzuziehen.

Noch eine weitere vorteilhafte Ausführungsform sieht vor, daß zunächst das Rohr mit einem Schlauchrohling mit einer Gas-Permeation, von mehr als 1 ml/(bar d m²) für polare und unpolare gasförmige Stoffe ausgekleidet und nachfolgend die Sperrschicht auf die Innenfläche des Schlauchrohlings aufgebracht wird. Hierdurch wird der Schlauch erst während des Auskleidungsvorganges fertiggestellt, so daß eine Vormontage des Schlauches nicht nötig ist, sondern erst auf der Baustelle erfolgt. Der Schlaüchrohling darf jedoch eine bestimmte Gas-Permeation nicht überschreiten, da gegebenenfalls für das Umstülpen und das Ankleben an der Rohrinnenwand unter Druckeinwirkung eine Mindestdichtigkeit des Schlauchrohlings erforderlich ist.

Hierbei ist es besonders vorteilhaft, wenn die Sperrschicht in flüssigem Zustand aufgespritzt wird. Dieses Verfahren ermöglicht es, die Dicke der Sperrschicht kostenoptimiert auf den jeweiligen Nennbetriebsdruck in der Rohrleitung und auf eine gewünschte Lebensdauer der Rohrauskleidung einzustellen.

Weitere vorteilhafte Ausführungsformen werden in den übrigen Unteransprüchen angegeben.

Die vorliegende Erfindung wird nun anhand mehrerer Figuren erläutert. Es zeigen:
- Fig. 1a: den Querschnitt eines erfindungsgemäßen Schlauches der erfindungsgemäßen Anordnung,
- Fig. 1b: den Querschnitt einer erfindungsgemäßen Anordnung,
- Fig. 2: das Einziehen einer schlauchförmigen Hülle in eine Rohrleitung unter Einsatz einer Einzugshilfe,
- Fig. 3: eine schematische Darstellung des Auskleidungsvorganges mittels eines Umstülpverfahrens.

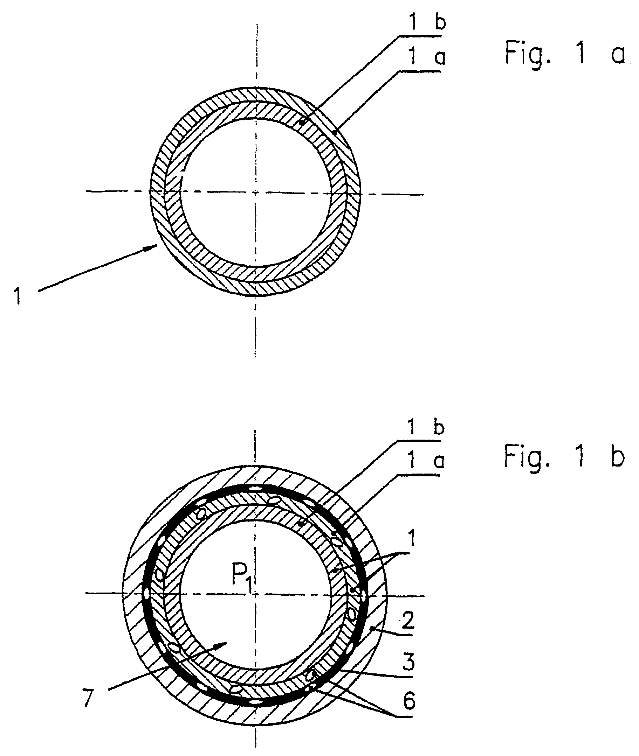

Fig. 1a zeigt einen Schlauch 1, der aus einem Schlauchrohling 1a sowie einer innenliegenden Sperrschicht besteht.

Der Schlauchrohling 1a des Schlauches 1 ist mit der Sperrschicht 1b des Schlauches fest verbunden. Der Schlauchrohling besteht aus einem Textilgewebe. Es ist selbstverständlich möglich, auch ein Textilgewirke oder ein anderes textiles Gebilde vorzusehen, wobei vorteilhaft ist, wenn das Material des Schlauchrohlings mit dem Klebstoff tränkbar ist. Der Schlauchrohling kann jedoch auch mehrschichtig ausgeführt sein. In diesem Falle kann neben einem textilen Gebilde eine weitere Schicht, etwa mit einem auf das textile Gebilde extrudierten thermoplastischen Kunststoff vorgesehen sein. In der in Fig. 1b gezeigten Einbaulage des Schlauches wäre diese extrudierte Beschichtung im Grenzbereich zwischen Schlauchrohling 1a und Sperrschicht 1b angeordnet. Ein solcher mehrschichtiger Schlauchrohling, welcher z.B. eine Schicht aus einem thermoplastischen Polyurethan-Elastomer enthält, weist vorzugsweise eine Gas-Permeation < 250 ml/(bar d m²) auf. In Fign. 1a und 1b besteht die Sperrschicht aus Aluminium. Die Stärke der Aluminiumschicht beträgt 50 bis 200 µm. Die Sperrschicht kann jedoch auch ein Verbund mehrerer Schichten sein, z.B. kann die Sperrschicht durch eine ein- oder beidseitig beschichtete Aluminiumfolie ausgebildet sein.

Fig. 1b zeigt eine Schlauchanordnung bzw. Auskleidung aus einem Schlauch 1, welcher vollflächig mit der Innenwandung eines Rohres bzw. einer Rohrleitung 2 mittels eines Klebstoffes verbunden ist. Der Schlauchrohling 1a ist mit dem Klebstoff getränkt, außerdem befindet sich Klebstoff in der Klebeschicht 3. Die Klebeschicht 3 sowie der mit Klebstoff getränkte Schlauchrohling 1a sind nicht vollkommen porenfrei, es sind stellenweise sogar größere Hohlräume 6 zwischen Rohrinnenwandung und dem Innenumfang des Schlauchrohlings 1a vorhanden. Diese Hohlräume verursachen den bei der Schilderung des Standes der Technik in der vorliegenden Anmeldung beschriebenen Abplatzeffekt herkömmlicher Schläuche, welcher auftritt, wenn ein Innendruck P1 im Fließraum 7 eines Fluids so schnell nachläßt, daß ein Druckausgleich aus der Klebeschicht bzw. dem klebstoffgetränkten Schlauchrohling in den Fließraum durch die Schlauchwand nicht mehr möglich ist. Der Schlauch 1 ist besonders für Innendrücke P1 ≥ 16 bar geeignet.

Die Sperrschicht 1b des Schlauches 1 weist, wenn im Betrieb der Rohrleitung unpolare Gase in dieser auftreten, eine Gas-Permeation von unter 1 ml/ (bar d m²) für diese auf, bzw. bei Auftreten polarer Gase eine Permeation von weniger als 0,1 ml/(bar d m²) für diese, d.h. daß eine radiale Permeation von Gasen aus dem Fließraum 7, welcher im Betriebszustand mit dem Druck P1 belegt ist, in radialer Richtung gegenüber Schläuchen nach dem Stand der Technik sehr gering ist. Die Diffusion von Gasen aus dem Fließraum 7 in den Schlauchrohling 1a bzw. in die Klebeschicht 3 verläuft daher deutlich langsamer als bei Schläuchen nach dem Stand der Technik. Es ist jedoch vorteilhaft, wenn die Gaspermeation im Bereich zwischen nur 0,0001 ml/(bar d m²) und 0,01 ml/(bar d m²) liegt.

Zur Herstellung des Schlauches 1, welcher zusammen mit dem Klebstoff die Innenauskleidung des in Fig. 1b gezeigten Rohres 2 bildet, sind verschiedene Varianten möglich.

Die Sperrschicht 1b kann durch Vakuumaufdampfung auf den Schlauchrohling 1a aufgetragen werden. Dies ist besonders bei Herstellung von Sperrschichten aus Aluminium vorteilhaft.

Es ist jedoch auch möglich, eine schlauchförmige Hülle geringer Gas-Permeation, welche die spätere Sperrschicht bildet, mit dem Schlauchrohling 1a zu schichten. Diese Variante kommt für sämtliche in dieser Anmeldung genannten Sperrschicht-Materialien in Betracht. So kann ein Schlauchrohling 1a über eine sperrschichtbildende schlauchförmige Hülle 1b, etwa aus Aluminiumfolie, gestreift werden (diese Variante ist vorteilhaft, wenn der Schlauch nicht umstülpend in das Rohr 2 eingebracht wird). Erfolgt die Auskleidung der Rohrleitung 2 unter Umstülpung des Schlauches 1, kann zur Vermeidung unnötiger Umstülpvorgänge der Schlauchrohling in eine schlauchförmige Hülle geringer Gas-Permeation eingezogen werden. Der Zusammenschluß von Sperrschicht und Schlauchrohling erfolgt durch Kleben mit einem Reaktions-, Haft-, Kontakt- oder Schmelzklebstoff.

Es ist jedoch auch möglich, daß eine streifenförmige Folie geringer Gas-Permeation um den Schlauchrohling 1a, unter Bildung der Sperrschicht 1b, z.B. spiralförmig, gewickelt wird. Hierzu wird vorher entweder die streifenförmige Folie oder die Außenfläche des Schlauchrohlings mit einem Klebstoff bedeckt. (Zur Erläuterung: In der vorliegenden Anmeldung wird unter "geringer Gas-Permeation" stets eine Gas-Permeation von unter 1 ml/ (bar d m²) verstanden).

Die Sperrschicht kann jedoch auch durch Extrusion auf den Schlauchrohling aufgebracht werden. Hierzu wird mit Vorrichtungen nach dem Stand der Technik ein Schlauchrohling durch eine Extrusionsvorrichtung gezogen, wobei der Schlauchrohling mit der Sperrschicht beschichtet wird. Es ist z.B. möglich, daß eine solche Sperrschicht aus mit Aluminiumpartikeln durchmischten thermoplastischen Kunststoffen besteht. Weiterhin ist es möglich, die Sperrschicht aus PVA (Polyvinylalkohol), flüssigkristallinen Polymeren (LC-Polymeren), PA (Polyamid), Polyacrylnitril, PVDC (Polyvinylendichlorid) oder siliciumorganischen Verbindungen herzustellen. Die Extrusion der Sperrschicht kann auf einen beliebigen Schlauchrohling erfolgen, entweder auf einen einschichtigen Schlauchrohling, etwa aus Textilgewebe, oder auch auf einen mehrschichtigen Schlauchrohling, welcher bereits in einem Extrudierverfahren, z.B. mit einem thermoplastischen Kunststoff, beschichtet wurde (simultane oder sukzessive Coextrusion).

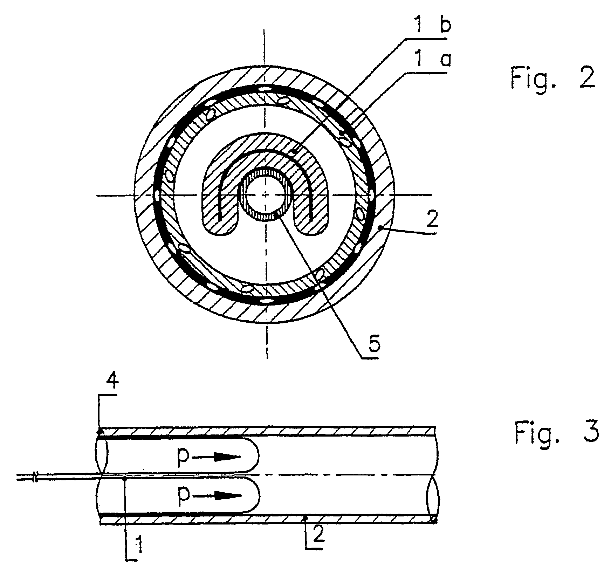

Fign. 2 und 3 zeigen verschiedene Möglichkeiten, ein Rohr 2 mit einem Schlauch 1 bzw. einem Schlauchrohling 1a oder einer sperrschichtbildenden schlauchförmigen Hülle auszukleiden.

Es ist möglich, einen Schlauch 1, etwa mit Hilfe einer Zugwinde, in ein Rohr 2 einzuziehen. Hierbei wird zunächst das Schlauchäußere und/oder die Innenwand der Rohrleitung mit Klebstoff versehen. Der Klebstoff kann hierbei ein flüssig aufgetragener Klebstoff bzw. eine unter Wärmeeinwirkung schmelzende, klebende Schicht sein. Nach dem Anbringen der klebenden Schicht bzw. des Klebstoffs wird der Schlauch 1 in das Rohr 2 eingezogen und durch Druckbeaufschlagung des Schlauchinneren im Wesentlichen vollflächig mit der Innenwand des Rohres 2 verklebt.

Fig. 3 zeigt einen Auskleidungsvorgang eines Schlauches 1 in eine Rohrleitung 2 im Umstülpverfahren. Hierbei wird der Schlauch 1 umstülpend in ein Rohr 2 mit jeweils einer Öffnung am Rohranfang und am Rohrende eingebracht. Vor dem Umstülpvorgang wird der Schlauch 1 innen mit Klebstoff 3 gefüllt, mit einem Schlauchende ringförmig und gasdicht an den Rohranfang gesetzt und ein Druckmedium p vom Rohräußeren auf die ringförmig fixierte Stelle 4 des Schlauches 1 eingeleitet, wobei das Rohr 2 unter Umstülpung des Schlauches 1 mit diesem ausgekleidet wird.

Je nach Art des Auskleidungsvorganges, also entweder mittels Einzugverfahren oder im Umstülpverfahren, ist die Art der Anbringung einer Sperrschicht auf den Schlauchrohling auszuführen. Die Anbringung sollte so erfolgen, daß die Sperrschicht 1b bei einem fertig ausgelegten Schlauch die innerste Schicht des Schlauches bildet (s. Fig. 1b).

Es ist jedoch auch möglich, die einzelnen Schichten des Schlauches 1 nacheinander in die Rohrleitung 2 einzubringen. Hierbei wird der Herstellungsprozeß des Schlauches mit dem Auskleidungsvorgang verzahnt. Dazu wird zunächst das Rohr mit einem Schlauchrohling mit einer Gas-Permeation der Wandung < 250 ml/(bar d m²) ausgekleidet. Dieser Auskleidungsvorgang erfolgt entweder im Einzugs- oder im Umstülpverfahren, wie oben am Beispiel des Schlauches 1 erläutert. Damit der Schlauchrohling bei Druckbeaufschlagung an die Innenwand des Rohres 2 gepreßt wird, darf der Schlauchrohling die geforderte Höchst-Gas-Permeation nicht überschreiten. Dieses Erfordernis wird z.B. von mehrschichtigen Schlauchrohlingen, welche eine mittels Extrusion aufgetragene-Beschichtung aus einem thermoplastischen Kunststoff enthalten, erfüllt.

Bei dem Auftrag der Sperrschicht auf die Innenfläche des vollflächig mit der Rohrinnenwandung verklebten Schlauchrohlings kommt wiederum das Einzugs- oder das Umstülpverfahren in Betracht.

So wird im Umstülpverfahren nach dem Auskleiden des Rohres mit dem Schlauchrohling die Innenfläche einer schlauchförmigen Hülle mit geringer Gas-Permeation und/oder die Innenfläche des Schlauchrohlings mit Klebstoff versehen und die schlauchförmige Hülle im Umstülpverfahren, nach dem in Fig. 3 gezeigten Prinzip, im Wesentlichen vollflächig auf die Innenfläche des Schlauchrohlings 1a aufgebracht. Als Materialien für die schlauchförmige Hülle (dies gilt sowohl für das Einzugs- als auch für das Umstülpverfahren) kommen sämtliche in der vorliegenden Anmeldung für die Sperrschicht genannten Materialien in Frage. Nach dem Auskleidungsvorgang bildet die schlauchförmige Hülle die Sperrschicht, der Klebstoff zwischen der schlauchförmigen Hülle und dem Schlauchrohling wird als eine weitere Schicht des Schlauchrohlings angesehen.

Im Einzugsverfahren wird nach dem Auskleiden des Rohres mit dem Schlauchrohling das Äußere einer schlauchförmigen Hülle 1b geringer Gas-Permeation und/oder die Innenwand des mit dem Schlauchrohling bereits ausgekleideten Rohres 2 mit Klebstoff versehen und die schlauchförmige Hülle 1b nachfolgend in das Rohr 2 gezogen und durch Druckbeaufschlagung des Inneren der schlauchförmigen Hülle 1b im Wesentlichen vollflächig mit der Innenfläche des Schlauchrohlings 1a verklebt. Das Einziehen der schlauchförmigen Hülle 1b in eine mit einem Schlauchrohling ausgekleidete Rohrleitung 2 mit Hilfe einer Einzugshilfe, welche als flexibles massearmes Rohr gestaltet ist, wird in Fig. 2 gezeigt. Hierbei wird die schlauchförmige Hülle 1b zunächst U-förmig über die Einzugshilfe 5 gelegt, dann die Einzugshilfe gemeinsam mit der schlauchförmigen Hülle in das Rohr 2 gezogen und nach Auslegen der schlauchförmigen Hülle im Rohr 2 die Einzugshilfe aus dem Rohr 2 entfernt. Durch das Einbringen der schlauchförmigen Hülle in das Rohr 2 mittels Einzugshilfe werden ein Knittern oder Falten der schlauchförmigen Hülle 1b bzw. ein Reiben der schlauchförmigen Hülle 1b an der Innenwand des Schlauchrohlings 1a und damit verbundene Schäden vermieden.

## Patentansprüche

1. Anordnung aus einer Rohrleitung (2) und einem diese auskleidenden Schlauch (1) zum Leiten eines Fluids unter hohem Druck von mindestens 16 bar, wobei der Schlauch (1) einen Schlauchrohling (1a) aufweist, der mittels eines Klebstoffes mit der Innenwand der Rohrleitung verklebt ist,
**dadurch gekennzeichnet, daß** dem Schlauchrohling (1a) eine Sperrschicht (1b) zugeordnet ist, welche eine Permeation von unpolaren gasförmigen Stoffen von unter 1 ml/(bar d m²) und/oder eine Permeation von polaren gasförmigen Stoffen von unter 0,1 ml/(bar d m²) aufweist.

2. Anordnung nach Anspruch 1, **dadurch gekennzeichnet, daß** die Permeation unpolarer und polarer gasförmiger Stoffe durch den Schlauch/Sperrschicht im Bereich zwischen 0,0001 ml/(bar d m²) und 0,01 ml/ (bar d m²) liegt.

3. Anordnung nach Anspruch 1 oder 2, **dadurch gekennzeichnet, daß** der Schlauchrohling (1a) ein- oder mehrschichtig ausgeführt ist und an eine weitere Schicht, welche als Sperrschicht (1b) ausgeführt ist, angrenzt.

4. Anordnung nach Anspruch 3, **dadurch gekennzeichnet, daß** der Schlauchrohling (1a) aus einem Gewebe, einem Gewirke oder einem anderen textilen Gebilde besteht.

5. Anordnung nach Anspruch 3, **dadurch gekennzeichnet, daß** ein zweischichtiger Schlauchrohling (1a) aus einem Gewebe, einem Gewirke oder einem anderen textilen Gebilde mit einer darauf befindlichen Beschichtung aus einem thermoplastischen Kunststoff besteht.

6. Anordnung nach einem der Ansprüche 1 bis 4, **dadurch gekennzeichnet, daß** die Sperrschicht (1b) aus Metall besteht.

7. Anordnung nach Anspruch 6, **dadurch gekennzeichnet, daß** die Sperrschicht (1b) aus Aluminium, Titan, Kupfer, Zink, Nickel, Blei, Chrom, Eisen oder Eisen-Zink- sowie Blei-Zinn-Legierungen besteht.

8. Anordnung nach Anspruch 7, **dadurch gekennzeichnet, daß** die Sperrschicht (1b) eine Dicke zwischen 10 und 100 µm hat.

9. Anordnung nach einem der Ansprüche 1 bis 4, **dadurch gekennzeichnet, daß** die Sperrschicht (1b) aus Polyvinylalkoholen (PVA), flüssigkristallinen Polymeren (LCP), Polyamiden (PA), Polyacrylnitril, Polyvinylidenchlorid (PVDC), oder siliciumorganischen Verbindungen besteht.

10. Anordnung nach einem der Ansprüche 1 bis 4, **dadurch gekennzeichnet, daß** die Sperrschicht (1b) aus einem mit Aluminiumpartikeln durchmischten thermoplastischen Kunststoff besteht.

11. Anordnung nach einem der Ansprüche 1 bis 4, **dadurch gekennzeichnet, daß** die Sperrschicht (1b) aus anorganischem Material besteht.

12. Anordnung nach Anspruch 11, **dadurch gekennzeichnet, daß** die Sperrschicht (1b) aus Siliciumoxid (SiOₓ mit x ≤ 2) oder Aluminiumoxid (Al₂O₃) besteht.

13. Anordnung nach einem der Ansprüche 3 bis 12, **dadurch gekennzeichnet, daß** auf der radial inneren Seite der Sperrschicht (1b) eine Schutzschicht auf diese aufgebracht ist.

14. Anordnung nach Anspruch 13, **dadurch gekennzeichnet, daß** die Schutzschicht der Sperrschicht (1b) aus Polyurethan, Polyester, einem Polyolefin, einem thermoplastischen Styrol-Butadien- oder Styrol-Ethylen-Propylen-Copolymer oder einer Mischung aus Polypropylen und vernetzten Ethylen-Propylen-Dien-Copolymeren besteht.

15. Anordnung nach einem der Ansprüche 1 bis 14, **dadurch gekennzeichnet, daß** der Klebstoff (3) zumindest einen Teil der Sperrschicht bildet.

16. Anordnung nach einem der Ansprüche 4 bis 14, **dadurch gekennzeichnet, daß** das textile Gebilde mit einem Material getränkt ist, das zumindest einen Teil der Sperrschicht bildet.

17. Anordnung nach einem der Ansprüche 4 bis 16, **dadurch gekennzeichnet, daß** das textile Gebilde aus diffusiorisarmen Garnen besteht. aus diffusionsarmen Garnen besteht.

18. Anordnung nach Anspruch 17, **dadurch gekennzeichnet, daß** das textile Gebilde aus Glas- oder Aramidfasern besteht.

19. Verfahren zur Herstellung einer Anordnung nach einem der Ansprüche 1 bis 18, bei dem ein Schlauchrohling (1a) mit der Innenwand einer Rohrleitung (2) verklebt wird, **dadurch gekennzeichnet, dass** auf bzw. in den Schlauchrohling (1a) eine Sperrschicht (1b) mit einer Permeation von unpolaren gasförmigen Stoffen von unter 1 ml/(bar d m²) und/oder einer Permeation von polaren gasförmigen Stoffen von unter 0,1 ml/(bar d m²) auf- bzw. eingebracht wird.

20. Verfahren nach Anspruch 19, **dadurch gekennzeichnet, dass** die Sperrschicht (1b) durch Vakuumaufdampfung auf den Schlauchrohling (1a) aufgetragen wird.

21. Verfahren nach Anspruch 19, **dadurch gekennzeichnet, dass** die Sperrschicht (1b) aus Metall besteht und galvanisch auf den Schlauchrohling (1a) aufgebracht wird.

22. Verfahren nach Anspruch 19, **dadurch gekennzeichnet, dass** der Schlauchrohling (1a) über eine sperrschichtbildende schlauchförmige Hülle (1b) geringer Gas-Permeation gestreift wird.

23. Verfahren nach Anspruch 19, **dadurch gekennzeichnet, dass** der Schlauchrohling (1a) in eine sperrschichtbildende schlauchförmige Hülle geringer Gas-Permeation eingezogen wird.

24. Verfahren nach Anspruch 19, **dadurch gekennzeichnet, dass** zur Bildung der Sperrschicht (1b) eine streifenförmige Folie geringer Gas-Permeation vor dem Einbringen des Schlauchrohlings (1a) um diesen oder nach dem Einbringen des Schlauchrohlings (1a) auf dessen Innenfläche gewickelt wird.

25. Verfahren nach Anspruch 19, **dadurch gekennzeichnet, dass** die Sperrschicht (1b) durch Extrusion oder durch Tauchen aufgebracht wird.

26. Verfahren nach Anspruch 19, **dadurch gekennzeichnet, daß** zunächst die Rohrleitung (2) mit einem Schlauchrohling (1a) mit einer Beschichtung mit einer Gas-Permeation von mehr als 1 ml/(bar d m²) für polare und unpolare gasförmige Stoffe ausgekleidet und nachfolgend die Sperrschicht (1b) auf die Innenfläche des Schlauchrohlings (1a) aufgebracht wird.

27. Verfahren nach Anspruch 26, **dadurch gekennzeichnet, daß** die Sperrschicht (1b) in flüssigem Zustand aufgespritzt wird.

28. Verfahren nach Anspruch 26, **dadurch gekennzeichnet, daß** nach dem Auskleiden der Rohrleitung (2) mit dem Schlauchrohling (1a) das Äußere einer sperrschichtbildenden schlauchförmigen Hülle (1b) geringe Gas-Permeation und/oder die Innenwand des Schlauchrohlings mit Klebstoff versehen werden und die schlauchförmige Hülle (1b) nachfolgend in das Rohr (2) eingezogen und durch Druckbeaufschlagung des Inneren der schlauchförmigen Hülle (1b) im Wesentlichen vollflächig mit der Innenfläche des Schlauchrohlings (1a) verklebt wird.

29. Verfahren nach Anspruch 28, **dadurch gekennzeichnet, daß** ein flexibles Einzugsrohr (5) als Einzugshilfe für die schlauchförmige Hülle (1b) verwendet wird.

30. Verfahren nach Anspruch 26, **dadurch gekennzeichnet, daß** nach dem Auskleiden des Rohres mit dem Schlauchrohling (1a) die Innenfläche einer schlauchförmigen Hülle (1b) geringer Gas-Permeation und/oder die Innenfläche des Schlauchrohlings (1a) mit Klebstoff versehen werden und die schlauchförmige Hülle (1b) im Umstülpverfahren im Wesentlichen vollflächig auf die Innenfläche des Schlauchrohlings (1a) aufgebracht wird. des Schlauchrohlings (1a) aufgebracht wird.

## Claims

1. Arrangement consisting of a pipe (2), and a tube (1) which lines this, for conducting a fluid under high pressure of at least 16 bar, the tube (1) having a tube blank (1a) which is glued to the inside wall of the pipe by means of an adhesive,
**characterised in that**
the tube blank (1a) has a barrier layer (1b) which has a permeation of less than 1 ml /(bar d m²) for nonpolar gaseous materials, and/or a permeation of less than 0.1 ml /(bar d m²) for polar gaseous materials.

2. Arrangement as in Claim 1,
**characterised in that**
the permeation of nonpolar and polar gaseous materials through the tube / barrier layer is between 0.0001 ml / (bar d m²) and 0.01 ml / (bar d m²).

3. Arrangement as in Claim 1 or 2,
**characterised in that**
the tube blank (1a) is single- or multi-layered, and adjoins a further layer which is in the form of a barrier layer (1b).

4. Arrangement as in Claim 3,
**characterised in that**
the tube blank (1a) consists of a woven, knitted or other textile structure.

5. Arrangement as in Claim 3,
**characterised in that**
a double-layer tube blank (1a) consists of a woven, knitted or other textile structure with a coating applied to it made of a thermoplastic plastic material.

6. Arrangement as in one of Claims 1 to 4,
**characterised in that**
the barrier layer (1b) is made of metal.

7. Arrangement as in Claim 6.
**characterised in that**
the barrier layer (1b) is made of aluminium, titanium, copper, zinc, nickel, lead. chromium or iron, or of iron-zinc or lead-tin alloys.

8. Arrangement as in Claim 7,
**characterised in that**
the barrier layer (1b) is between 10 and 100 µm in thickness.

9. Arrangement as in one of Claims 1 to 4,
**characterised in that**
the barrier layer (1b) is made of polyvinyl alcohols (PVA), liquid crystal polymers (LCP), polyamides (PA), polyacrylonitrile, polyvinylidene chloride (PVDC) or silicon organic compounds.

10. Arrangement as in one of Claims 1 to 4,
**characterised in that**
the barrier layer (1b) is made of a thermoplastic plastic material mixed with aluminium particles.

11. Arrangement as in one of Claims 1 to 4,
**characterised in that**
the barrier layer (1b) is made of inorganic material.

12. Arrangement as in Claim 11,
**characterised in that**
the barrier layer (1b) is made of silicon oxide (SiOₓ , where x ≤ 2)or aluminium oxide (Al₂O₃).

13. Arrangement as in one of Claims 3 to 12,
**characterised in that**
there is a protective layer applied to the radially inner side of the barrier layer (1b).

14. Arrangement as in Claim 13,
**characterised in that**
the protective layer of the barrier layer (1b) is made of polyurethane, potyester, a polyolefin, a thermoplastic styrene-butadiene or styrene-ethylene-propylene copolymer, or a mixture of polypropylene and cross-linked ethylene-propylene-diene copolymers.

15. Arrangement as in one of Claims 1 to 14,
**characterised in that**
the adhesive (3) forms at least part of the barrier layer.

16. Arrangement as in one of Claims 4 to 14,
**characterised in that**
the textile structure is impregnated with a material which forms at least part of the barrier layer.

17. Arrangement as in one of Claims 4 to 16,
**characterised in that**
the textile structure is made of low-diffusion yarns.

18. Arrangement as in Claim 17,
**characterised in that**
the textile structure is made of glass or aramide fibres.

19. Method for the production of an arrangement as in one of Claims 1 to 18, in which a tube blank (1a) is glued to the inside wall of a pipe (2),
**characterised in that**
a barrier layer (1b), having a permeation for nonpolar gaseous materials of less than 1 ml / (bar d m²) and/or a permeation for polar gaseous materials of less than 0.1 ml/bar d m²) is applied on to, or introduced into, the tube blank (1a).

20. Method as in Claim 19,
**characterised in that**
the barrier layer (1b) is applied on to the tube blank (1b) by the vacuum evaporation process.

21. Method as in Claim 19,
**characterised in that**
the barrier layer (1b) is made of metal, and is applied galvanically on to the tube blank (1a).

22. Method as in Claim 19,
**characterised in that**
the tube blank (1a) is slipped over a tubular cover (1b) with low gas permeation which forms a barrier layer.

23. Method as in Claim 19,
**characterised in that**
the tube blank (1a) is inserted into a tubular cover with low gas permeation which forms a barrier layer.

24. Method as in Claim 19,
**characterised in that**,
in order to form a barrier layer (1b), a strip-shaped foil of low gas permeation is wrapped around the tube blank (1a) before the insertion of the latter, or is wrapped on to the inner face of the tube blank (1a) after the latter is inserted.

25. Method as in Claim 19,
**characterised in that**
the barrier layer (1b) is applied by extrusion or dipping.

26. Method as in Claim 19,
**characterised in that**
initially, the pipe (2) is lined with a tube blank (1a) which has a coating with a gas permeation of more than 1 ml / (bar d m²) for polar and nonpolar gaseous materials, and subsequently the barrier layer (1b) is applied to the inner face of the tube blank (1a).

27. Method as in Claim 26,
**characterised in that**
the barrier layer (1b) is sprayed on in a liquid state.

28. Method as in Claim 26,
**characterised in that**,
after the pipe (2) has been lined with the tube blank (1a), adhesive is applied to the outside of a tubular cover (1b) with low gas permeation which forms a barrier layer, and/or to the inside wall of the tube blank, and the tubular cover (1b) is then inserted into the pipe (2) and is glued, essentially over the entire area, to the inner face of the tube blank (1a) by means of the application of pressure to the inside of the tubular cover (1b).

29. Method as in Claim 28,
**characterised in that**
a flexible insertion tube (5) is used as an aid to the insertion of the tubular cover (1b).

30. Method as in Claim 26,
**characterised in that**,
after the pipe has been lined with the tube blank (1a), adhesive is applied to the inner face of a tubular cover (1b) of low gas permeation, and/or to the inner face of the tube blank (1a), and the tubular cover (1b) is applied, essentially over the enlire area, to the inner face of the tube blank (1a) by the inversion method.

## Revendications

1. Dispositif composé d'une tuyauterie (2) et d'un tuyau flexible (1) garnissant celle-ci pour canaliser un fluide sous haute pression d'au moins 16 bars, le tuyau flexible (1) comportant une ébauche de tuyau flexible (1a) qui est collée à la paroi intérieure de la tuyauterie à l'aide d'une colle, **caractérisé en ce qu'**une couche d'isolation (1b), qui présente une perméation aux matières gazeuses non polaires de moins de 1 ml/(bar d m²) et/ou une perméation aux matières gazeuses polaires de moins de 0,1 ml/(bar d m²), est associée à l'ébauche de tuyau flexible (1a).

2. Dispositif selon la revendication 1, **caractérisé en ce que** la perméation aux matières gazeuses non polaires et polaires à travers le tuyau flexible/la couche d'isolation se trouve dans la plage comprise entre 0,0001 ml/(bar d m²) et 0,01 ml/(bar d m²).

3. Dispositif selon la revendication 1 ou 2, **caractérisé en ce que** l'ébauche de tuyau flexible (1a) est conçue avec une ou plusieurs couches et **en ce qu'**elle est adjacente à une autre couche qui est conçue comme une couche d'isolation (1b)

4. Dispositif selon la revendication 3, **caractérisé en ce que** l'ébauche de tuyau flexible (1a) se compose d'un tissu, d'un tissu à mailles ou d'une autre matière textile.

5. Dispositif selon la revendication 3, **caractérisé en ce qu'**une ébauche de tuyau flexible à deux couches (1a) se compose d'un tissu, d'un tissu à mailles ou d'une autre matière textile avec un revêtement en une matière plastique thermoplastique se trouvant dessus.

6. Dispositif selon l'une quelconque des revendications 1 à 4, **caractérisé en ce que** la couche d'isolation (1b) se compose de métal.

7. Dispositif selon la revendication 6, **caractérisé en ce que** la couche d'isolation (1b) se compose d'aluminium, de titane, de cuivre, de zinc, de nickel, de plomb, de chrome, de fer ou d'alliages de fer-zinc ainsi que d'alliages de plomb-étain.

8. Dispositif selon la revendication 7, **caractérise en ce que** la couche d'isolation (1b) a une épaisseur comprise entre 10 et 100 µm.

9. Dispositif selon l'une quelconque des revendications 1 à 4, **caractérisé en ce que** la couche d'isolation (1b) se compose d'alcools polyvinyliques (PVA), de polymères de cristaux liquides (LCP), de polyamides (PA), de polyacrylonitrile, de chlorure de polyvinylidène (PVDC) ou de composés organiques au silicium.

10. Dispositif selon l'une quelconque des revendications 1 à 4, **caractérisé en ce que** la couche d'isolation (1b) se compose d'une matière plastique thermoplastique mélangée à des particules d'aluminium.

11. Dispositif selon l'une quelconque des revendications 1 à 4, **caractérisé en ce que** la couche d'isolation (1b) se compose d'une matière inorganique.

12. Dispositif selon la revendication 11, **caractérisé en ce que** la couche d'isolation (1b) se compose d'oxyde de silicium (SiOₓ avec x ≤ 2) ou d'oxyde d'aluminium (Al₂O₃).

13. Dispositif selon l'une quelconque des revendications 3 à 12, **caractérisé en ce que**, sur le côté intérieur radial de la couche d'isolation (1b) une couche de protection est appliquée sur celle-ci.

14. Dispositif selon la revendication 13, **caractérisé en ce que** la couche de protection de la couche d'isolation (1b) se compose de polyuréthane, de polyester, d'une polyoléfine, d'un copolymère thermoplastique de styrol-butadiène ou de styrol-éthylène-propylène ou d'un mélange de polypropylène et de copolymères réticulés d'éthylène-propylène-diène.

15. Dispositif selon l'une quelconque des revendications 1 à 14, **caractérisé en ce que** la colle (3) forme au moins une partie de la couche d'isolation.

16. Dispositif selon l'une quelconque des revendications 4 à 14, **caractérisé en ce que** la matière textile est imprégnée d'une matière qui forme au moins une partie de la couche d'isolation.

17. Dispositif selon l'une quelconque des revendications 4 à 16, **caractérisé en ce que** la matière textile est constituée de fils à faible diffusion.

18. Dispositif selon la revendication 17, **caractérisé en ce que** la matière textile est constituée de fibres de verre ou d'aramide.

19. Procédé pour la fabrication d'un dispositif selon l'une quelconque des revendications 1 à 18, dans lequel une ébauche de tuyau flexible (1a) est collée à la paroi intérieure d'une tuyauterie (2), **caractérisé en ce qu'**une couche d'isolation (1b) présentant une perméation aux matières gazeuses non polaires de moins de 1 ml/(bar d m²) et/ou une perméation aux matières gazeuses polaires de moins de 0,1 ml/(bar d m²), est appliquée sur ou placée dans l'ébauche de tuyau flexible (1a).

20. Procédé selon la revendication 19, **caractérisé en ce que** la couche d'isolation (1b) est appliquée sur l'ébauche de tuyau flexible (1a) par dépôt en phase vapeur sous vide.

21. Procédé selon la revendication 19, **caractérisé en ce que** la couche d'isolation (1b) se compose de métal et **en ce qu'**elle est appliquée sur l'ébauche de tuyau flexible (1a) par galvanisation.

22. Procédé selon la revendication 19, **caractérisé en ce que** l'ébauche de tuyau flexible (1a) est striée sur une gaine (1b) tubulaire formant couche d'isolation, avec une faible perméation aux gaz.

23. Procédé selon la revendication 19, **caractérisé en ce que** l'ébauche de tuyau flexible (1a) est insérée dans une gaine tubulaire formant couche d'isolation avec une faible perméation aux gaz.

24. Procédé selon la revendication 19, **caractérisé en ce que**, pour former la couche d'isolation (1b), une feuille striée avec une faible perméation aux gaz est enroulée autour de l'ébauche de tuyau flexible (1a) avant l'installation de celle-ci, ou sur la surface intérieure de l'ébauche de tuyau flexible (1a) après l'installation de celle-ci.

25. Procédé selon la revendication 19, **caractérisé en ce que** la couche d'isolation (1b) est appliquée par extrusion ou par immersion.

26. Procédé selon la revendication 19, **caractérisé en ce que** la tuyauterie (2) est d'abord garnie d'une ébauche de tuyau flexible (1a) avec un revêtement ayant une perméation aux gaz de plus de 1 ml/(bar d m²) pour les matières gazeuses polaires et non polaires, puis **en ce que** la couche d'isolation (1b) est appliquée sur la surface intérieure de l'ébauche de tuyau flexible (1a).

27. Procédé selon la revendication 26, **caractérisé en ce que** la couche d'isolation (1b) est pulvérisée à l'état liquide.

28. Procédé selon la revendication 26, **caractérisé en ce que**, après le garnissage de la tuyauterie (2) avec l'ébauche de tuyau flexible (1a), l'extérieur d'une gaine (1b) tubulaire formant couche d'isolation avec une faible perméation aux gaz et/ou la paroi intérieure de l'ébauche de tuyau flexible sont munies de colle, et la gaine tubulaire (1b) est ensuite insérée dans le tuyau (2) et est collée sensiblement sur toute la surface intérieure de l'ébauche de tuyau flexible (1a) par alimentation de pression de l'intérieur de la gaine tubulaire (1b).

29. Procédé selon la revendication 28, **caractérisé en ce qu'**un tuyau d'introduction flexible (5) est utilisé comme auxiliaire d'introduction pour la gaine tubulaire (1b).

30. Procédé selon la revendication 26, **caractérisé en ce que**, après le garnissage du tuyau avec l'ébauche de tuyau flexible (1a), la surface intérieure d'une gaine tubulaire (1b) avec une faible perméation aux gaz et/ou la surface intérieure de l'ébauche de tuyau flexible(la) sont munies de colle, et la gaine tubulaire (1b) est appliquée sensiblement sur toute la surface intérieure de l'ébauche de tuyau flexible (1a) par un procédé de retournement.
